# EUROPEAN PATENT SPECIFICATION

(11) **EP 3 508 329 B1**
(45) Date of publication and mention of the grant of the patent: **11.11.2020**
(21) Application number: 18167885.5
(22) Date of filing: 18.04.2018
(51) Int. Cl.: B29C 64/106, B29C 64/35, B29C 64/30, B29C 64/386, G01B 11/24, B33Y 30/00

(54) **THREE-DIMENSIONAL PRINTER AND SCANNING MODULE THEREOF**
DREIDIMENSIONALER DRUCKER UND ABTASTMODUL DAFÜR
IMPRIMANTE TRIDIMENSIONNELLE ET SON MODULE DE BALAYAGE

(30) Priority: 08.01.2018 CN 201810015793
(43) Date of publication of application: 10.07.2019
(73) Proprietor: XYZprinting, Inc., New Taipei City 22201 (TW); Kinpo Electronics, Inc., New Taipei City 22201 (TW)
(72) Inventor: LEE, Yang-Teh, New Taipei City 22201 (TW); JUANG, Jia-Yi, New Taipei City 22201 (TW); HUANG, Chun-Hsiang, New Taipei City 22201 (TW); HSIEH, Yi-Chu, New Taipei City 22201 (TW); HO, Ming-En, New Taipei City 22201 (TW)
(74) Representative: 2K Patentanwälte Blasberg Kewitz & Reichel

(56) References cited:
- EP-A1- 3 100 846
- WO-A1-2016/143942
- US-A1- 2016 297 149

## Description

### BACKGROUND OF THE INVENTION

### 1. Technical Field

The technical field relates to a printer structure, and in particular, to a three-dimensional printer and a scanning module thereof.

### 2. Description of Related Art

Three-dimensional (3D) printing is one of quick formation techniques. As a movable platform moves a work carrier, metal powders or plastic powders are deposited layer by layer and fused together to build up a 3D object by additive manufacturing techniques. Toy parts, mechanical parts or artificial human bones can be made by 3D printing, so 3D printing is growing rapidly in popularity with the consuming public.

However, in order to carry out 3D printing, a drawing software like a computer-aided design software is used to build a model first, and then the 3D model is sliced into layers of cross-sections. Finally, a 3D printer prints out an object according to the information of the cross-sections. Hence, a user has to learn a drawing software first before operating the 3D printer. As a result, popularity of the 3D printers is difficult to grow rapidly.

WO2016143942 (A1) discloses is a 3D printing apparatus. The 3D printing apparatus includes a build tray on which a building object is layered, a head unit including a plurality of nozzles for spraying a source ink having a gel state onto the build tray, a curing lamp curing the source ink sprayed onto the build tray, and a maintenance unit disposed under the head unit to clean the source ink attached to the nozzles. The maintenance unit includes a case, a nozzle cleaner accommodated in the case to clean the source ink attached to the nozzles by horizontally moving in contact with the head unit, a moving unit disposed in the case, the moving unit being connected to the nozzle cleaner to move the nozzle cleaner in a front/rear direction of the head unit. The nozzle cleaner includes a cleaner housing connected to the moving unit and a cleaning part mounted on the cleaner housing to perform a suction operation for suctioning the ink attached to the nozzles and a wiping operation for wiping the ink the attached to the nozzles.

US2016297149 (A1) discloses a system, apparatus, and method for 3D scanning and printing that includes a 3D printer device with a rotatable platform that can be controlled by an associated 3D image scanning device. The scanning device can be a smart phone or the like and can generate commands to move the rotatable platform of the printer in association with scanning operation. The smart phone can be detachably coupled to the 3D printer and perform the scan through an aligned aperture. The touch screen of the phone can serve as a control and status interface for the scanning operation. The resulting scan can be stored in a cloud based service where 3D processing can be further applied. The processed 3D printer file can be accessed by other devices connected to the cloud service. An object can thereby be scanned at one 3D printer location and sent to another 3D printer location via the cloud connection or a peer-to-peer network.

EP3100846A1 discloses detachable scanning and supporting module of a 3D printer including a machine body, a printing platform, a scanning and driving module, and a scanning and supporting module. The machine body has a bottom plate. The printing platform and the scanning and driving module are disposed on the bottom plate. The printing platform includes a slide track and a movable printing substrate. The scanning and driving module and the slide track are staggeredly disposed such that the scanning and driving module and the slide track do not interfere with the movement of the printing substrate. The scanning and supporting module is detachably combined with the scanning and driving module and is driven by the scanning and driving module (40, 40a, 40b).

In view of this, the inventor studied various technologies and created an effective solution in the present disclosure.

### SUMMARY OF THE INVENTION

The invention is defined by the combination of features of claim 1. The present disclosure provides a three-dimensional (3D) printer and a scanning module thereof. The scanning module is installed in a remaining space inside a case. A user can use the scanning module to acquire a three-dimensional model information for a scanned object. Then, according to the three-dimensional model information, the three-dimensional printer prints out a three-dimensional object just like the scanned object. Therefore, users do not need to learn a drawing software like a computer-aided design software before operating the three-dimensional printer. Hence, the three-dimensional printer can gain popularity more easily.

The present embodiment provides a three-dimensional (3D) printer, comprising: a case, a containing chamber being disposed inside the case, the containing chamber being divided into a first area and a second area; a printing platform disposed in the first area; a cleaning module disposed in a portion of the second area, the remaining portion of the second area forming a remaining space; a three-dimensional printing module arranged over the printing platform; a coloring nozzle module, the coloring nozzle module being arranged over the printing platform and movable to the cleaning module, the cleaning module being used to clean the coloring nozzle module; and a scanning module installed in the remaining space.

One embodiment of the present disclosures provides a scanning module of a three-dimensional printer, the three-dimensional printer including a bottom base, the bottom base including a first electrical connector, the scanning module comprising: an image capture device detachably connected to the bottom base, the image capture device including a second connector, the second connector being electrically connected to the first electrical connector; and a rotary plate detachably connected to the bottom base, the image capture device being disposed corresponding to the rotary plate.

To sum up, the cleaning module is installed inside the case. In order to prevent the printing platform from colliding with the cleaning module during ascending and descending movement of the printing platform, the printing platform and the cleaning module are staggered. Since the cleaning module is much smaller than the printing platform, the remaining space is formed at one side and under the cleaning module. The scanning module is installed in the remaining space inside the case, so that a scanning feature is added to the three-dimensional printer without the need of increasing the size of the three-dimensional printer, and the space inside the three-dimensional printer is used effectively.

### BRIEF DESCRIPTION OF THE DRAWINGS

The disclosure will become more fully understood from the detailed description and the drawings given herein below for illustration only, and thus does not limit the disclosure, wherein:
FIG. 1 is a perspective assembled view illustrating a three-dimensional printer of the present disclosure;
FIG. 2 is a perspective exploded view illustrating the three-dimensional printer of the present disclosure;
FIG. 3 is a perspective view illustrating a scanning module of the present disclosure;
FIG. 4 is a front view illustrating the three-dimensional printer;
FIG. 5 is a top view illustrating the three-dimensional printer;
FIG. 6 is a schematic in-use view illustrating the three-dimensional printer;
FIG. 7 is another in-use view illustrating the three-dimensional printer;
FIG. 8 is a cross-sectional view illustrating the three-dimensional printer; and
FIG. 9 is a cross-sectional view taken along line 9-9 of FIG. 8.

### DETAILED DESCRIPTION

Detailed descriptions and technical contents of the present disclosure are illustrated below in conjunction with the accompanying drawings. However, it is to be understood that the descriptions and the accompanying drawings disclosed herein are merely illustrative and exemplary and not intended to limit the scope of the present disclosure.

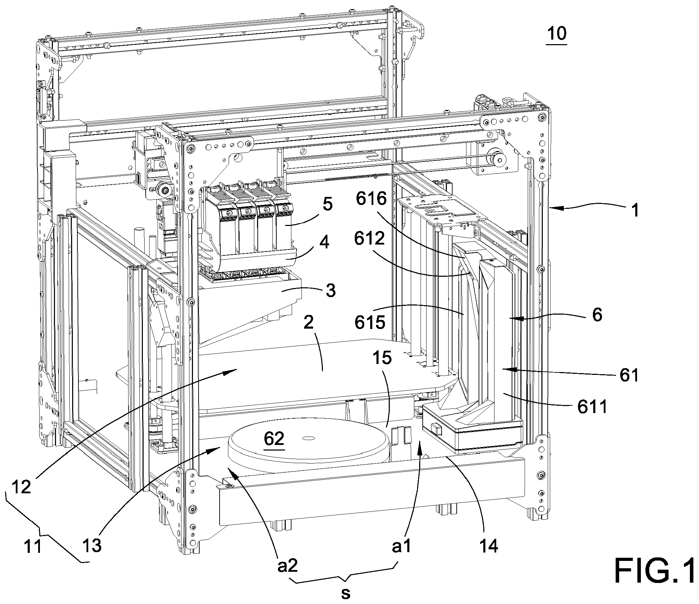

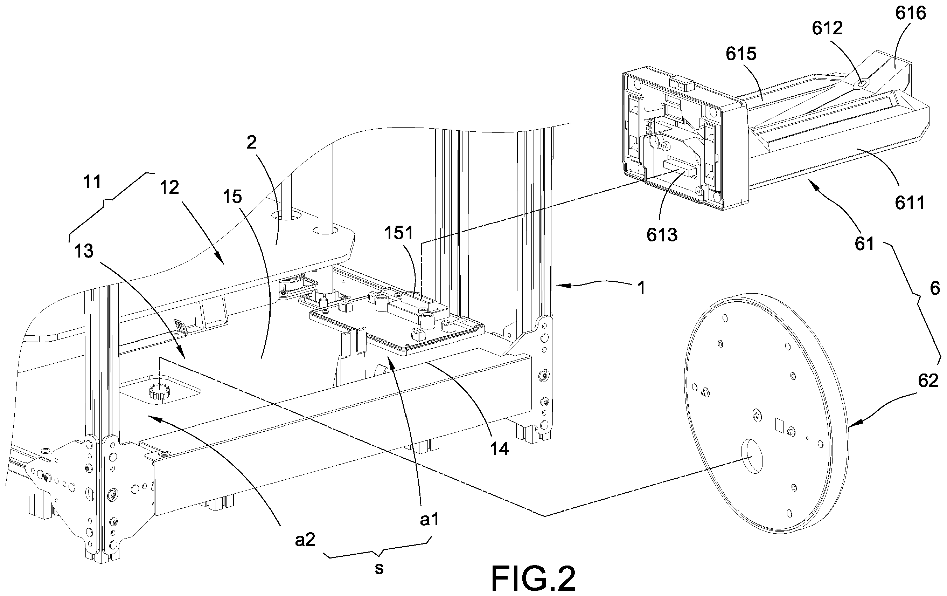

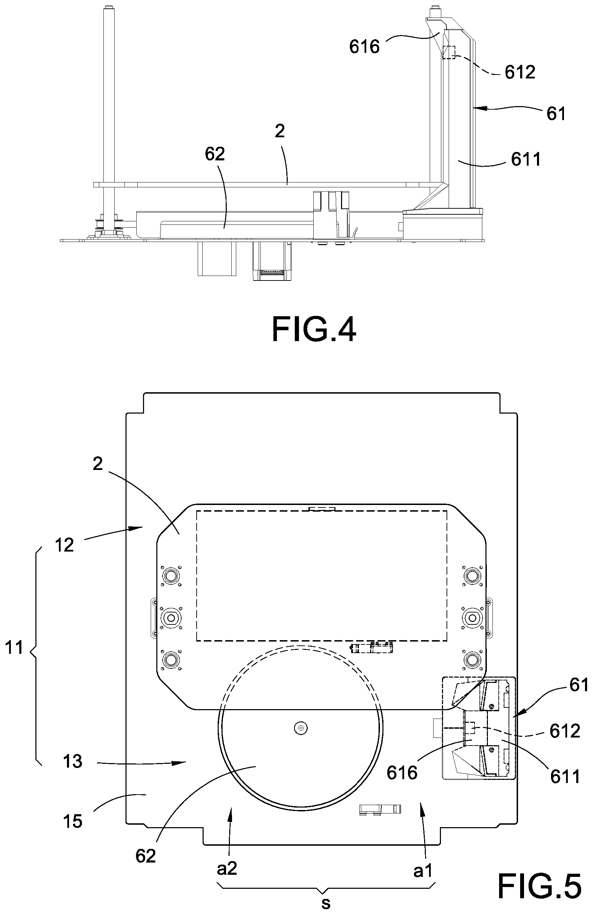

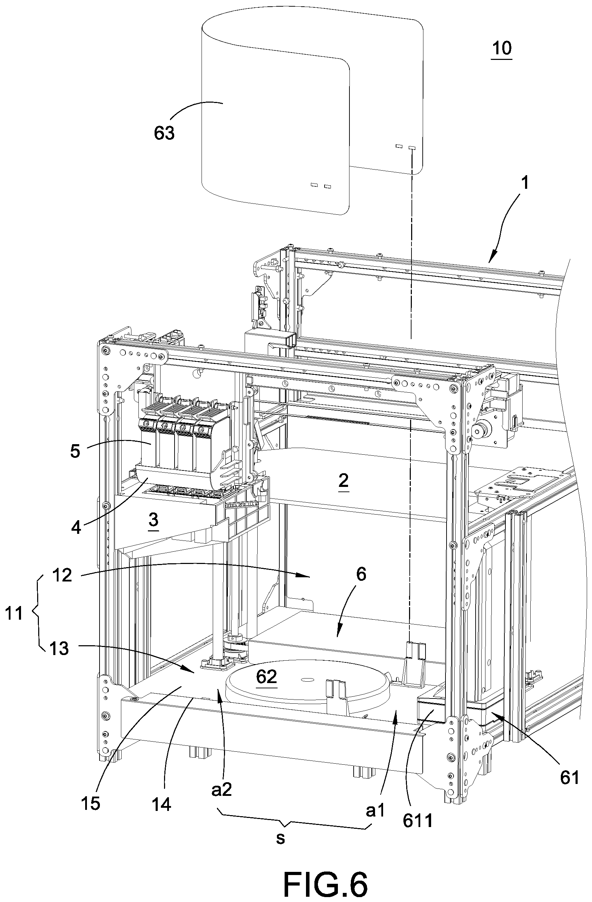

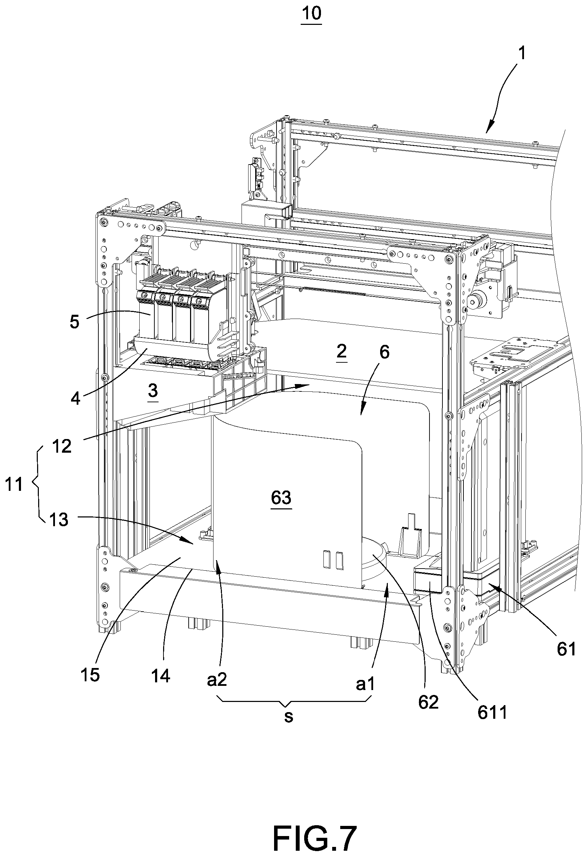

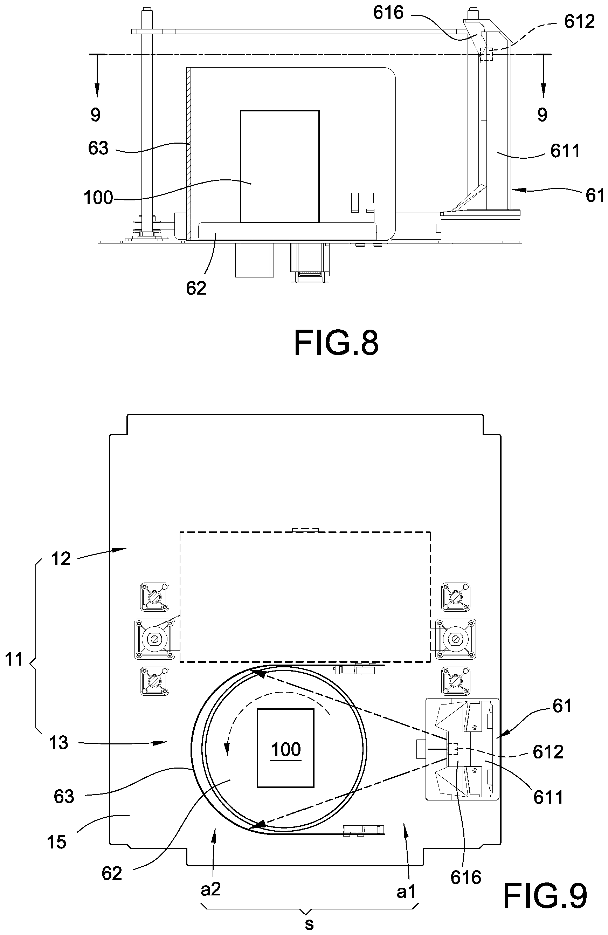

Referring to Figs. 1 to 9, the present disclosure provides a three-dimensional (3D) printer and a scanning module thereof. The three-dimensional printer 10 includes a case 1, a printing platform 2, a cleaning module 3, a three-dimensional printing module 4, a coloring nozzle module 5, and a scanning module 6. The scanning module 6 includes an image capture device 61 and a rotary plate 62.

As shown in Figs. 1, 6 and 7, a containing chamber 11 is disposed inside the case 1, the containing chamber 11 is divided into a first area 12 and a second area 13. The case 1 includes an opening 14 communicating with the containing chamber 11 and includes a bottom base 15 disposed at the bottom of the containing chamber 11. The bottom base 15 includes a first electrical connector 151.

As shown in Figs. 1, 6 and 7, the printing platform 2 is usually a rectangular platform or a round platform, so a large rectangular space is needed for ascending or descending of the printing platform 2. In order to prevent the printing platform 2 from colliding with the cleaning module 3 during ascending or descending movement of the printing platform 2, the platform 2 and the cleaning module 3 are staggered and not overlapped. The cleaning module 3 occupies a much smaller space than the printing platform 2, so the printing platform 2 is installed in the first area 12, and the cleaning module 3 is installed in a portion of the second area 13. The remaining portion of the second area 13 forms a remaining space s. The remaining space s is divided into a first idle space a1 opposite to the cleaning module 3 and a second idle space a2 under the cleaning module 3.

The printing platform 2 in the first area 12 can be secured in a movable or fixed manner. The cleaning module 3 in the second area 13 can also be secured in a movable or fixed manner. The first area 12 is away from the opening 14 of the case 1, and the second area 13 is disposed adjacent to the opening 14 of the case 1. Since the cleaning module 3 often needs to be replaced or cleaned, the cleaning module 3 is disposed near the opening 14 to facilitate detachment and attachment of the cleaning module 3.

As shown in Figs. 1, 6 and 7, the three-dimensional printing module 4 is installed over the printing platform 2. The coloring nozzle module 5 is also arranged over the printing platform 2 and is movable to the cleaning module 3. The cleaning module 3 is used to clean the coloring nozzle module 5. The three-dimensional printing module 4 and the coloring nozzle module 5 are assembled to the same movable base (not illustrated) to move together; however, the present disclosure is not limited in this regard, so the three-dimensional printing module 4 and the coloring nozzle module 5 can also be assembled to different movable bases and move separately.

As shown in Figs. 1 to 9, the scanning module 6 is installed in the remaining space s. The scanning module 6 includes an image capture device 61 and a rotary plate 62, the image capture device 61 is installed in the first idle space a1, the rotary plate 62 is installed in the second idle space a2, and the image capture device 61 is disposed corresponding to the rotary plate 62.

In detail, the image capture device 61 and the rotary plate 62 are detachably connected to the bottom base 15, the image capture device 61 includes a second connector 613, and the second connector 613 is electrically connected to the first electrical connector 151, so that the first electrical connector 151 can supply power to the image capture device 61.

The image capture device 61 includes a body 611 and includes one or multiple image processors 612 installed on the body 611, the second connector 613 is installed at the bottom of the body 611, and the image processor 612 is electrically connected to the second connector 613, so that the first electrical connector 151 can supply power to the image processor 612. The image processor 612 is a camera or a 3D scanner having a structured light generator.

The image capture device 61 further includes one or multiple light emitting assemblies 614, the light emitting assembly 614 is installed on the body 611 and disposed at one side of the image processor 612, and the light emitting assembly 614 is electrically connected to the second connector 613, so that the first electrical connector 151 can supply power to the light emitting assembly 614. In the present embodiment, the light emitting assembly 614 is a light-emitting-diode (LED) strip; however, the present disclosure is not limited in this regard.

The image capture device 61 further includes one or multiple light diffusion structures 615. The light diffusion structure 615 is installed on the body 611 and covers the light emitting assembly 614, and the light diffusion structure 615 is a matte board.

In the present embodiment, the three-dimensional printer 10 has two image processors 612, two light emitting assemblies 614 and two light diffusion structures 615. The body 611 includes, at its middle section, an inclined protruding block 616 gradually thickening towards a top thereof, the two image processors 612 are installed one above the other in spaced-apart relation to each other on the inclined protruding block 616, so that the two image processors 612 overlook the rotary plate 62. The body 611 includes two trenches 617 disposed at two sides of the inclined protruding block 616, the two light emitting assemblies 614 are disposed at the two trenches 617 respectively, and the two light diffusion structures 615 cover the two trenches 617 respectively.

The scanning module 6 further includes a back plate 63, the back plate 63 is detachably connected to the bottom base 15 and surrounds the rotary plate 62 at one side away from the image capture device 61, and the back plate 63 is a light reflecting board or a light absorbing board.

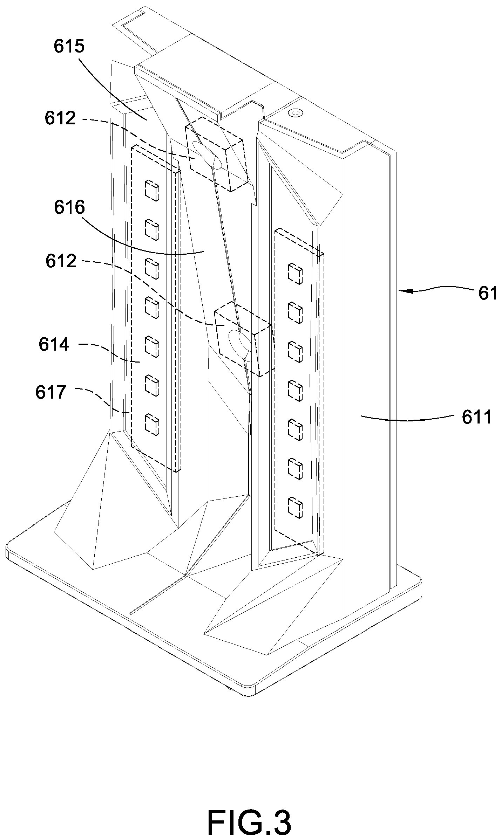

Please refer to Figs. 3, 6 and 9 illustrating the three-dimensional printer 10 and the scanning module 6. The image capture device 61 is installed in the remaining space s inside the case 1. Then, the printing platform 2 is lifted, and the back plate 63 is installed in a space under the printing platform 2. The back plate 63 surrounds the rotary plate 62 at one side away from the image capture device 61. An object 100 to scan is placed on the rotary plate 62 and rotated by the rotary plate 62, so that the image processor 612 of the image capture device 61 can capture a three-dimensional model information of the scanned object 100 during its rotary movement.

Referring to Figs. 1, 5 and 6, the back plate 63 is then removed to allow the printing platform 2 to ascend or descend. After that, the three-dimensional model information indicates the three-dimensional printing module 4 and the coloring nozzle module 5 to print out a three-dimensional object the same as the scanned object 100 by successively adding material layer by layer according to the three-dimensional model information, so that users can operate the three-dimensional printer 10 easily without the need of learning a drawing software like a computer-added design software in advance, and thus the three-dimensional printer 10 can gain more popularity.

As shown in Fig. 3 and Figs. 7 to 9, the two image processors 612 are installed one above the other in spaced-apart relation to each other on the inclined protruding block 616, so that the two image processors 612 can overlook the object 100 to scan. The image capture device 61 further includes the light emitting assembly 614 and the light diffusion structure 615, so that the light generated from the light emitting assembly 614 can gently light up the object 100 to scan. When the back plate 63 is a light reflecting board, it concentrates light rays on the object 100 to scan. When the back plate 63 is a light absorbing board, it can absorb unwanted light rays on the object 100 to scan. Therefore, the image capture device 61 can correctly and clearly capture the three-dimensional model information.

As shown in Figs. 1, 2, 4, 5, 6 to 9, the cleaning module 3 is installed inside the case 1. In order to prevent the printing platform 2 from colliding with the cleaning module 3 during ascending and descending movement of the printing platform 2, the printing platform 2 and the cleaning module 3 are staggered. Since the cleaning module 3 is much smaller than the printing platform 2, the remaining space s is formed at one side and under the cleaning module 3. The scanning module 6 is installed in the remaining space s inside the case 1, so that a scanning feature is added to the three-dimensional printer 10 without the need of increasing the size of the three-dimensional printer 10, and the space inside the three-dimensional printer 10 is used effectively.

## Claims

1. A three-dimensional printer, comprising:
a case (1), a containing chamber (11) being disposed inside the case (1), the containing chamber (11) being divided into a first area (12) and a second area (13);
a printing platform (2) disposed in the first area (12);
a cleaning module (3) disposed in a portion of the second area (13), the remaining portion of the second area (13) forming a remaining space (s);
a three-dimensional printing module (4) arranged over the printing platform (2);
a coloring nozzle module (5), the coloring nozzle module (5) being arranged over the printing platform (2) and movable to the cleaning module (3), the cleaning module (3) being used to clean the coloring nozzle module (5); **characterized by**
a scanning module (6) installed in the remaining space (s),
wherein the remaining space (s) is divided into a first idle space (a1) opposite to the cleaning module (3) and a second idle space (a2) under the cleaning module (3), the scanning module (6) includes an image capture device (61) and a rotary plate (62), the image capture device (61) is installed in the first idle space (a1), the rotary plate (62) is installed in the second idle space (a2), and the image capture device (61) is disposed corresponding to the rotary plate (62).

2. The three-dimensional printer according to claim 1, wherein the case (1) includes an opening (14) communicating with the containing chamber (11), the first area (12) is away from the opening (14), and the second area (13) is disposed adjacent to the opening (14).

3. The three-dimensional printer according to claim 1, wherein the case (1) includes a bottom base (15) disposed at the bottom of the containing chamber (11), the image capture device (61) and the rotary plate (62) are detachably connected to the bottom base (15), the bottom base (15) includes a first electrical connector (151), the image capture device (61) includes a second connector (613), and the second connector (613) is electrically connected to the first electrical connector (151).

4. The three-dimensional printer according to claim 3, wherein the image capture device (61) includes a body (611) and at least one image processor (612) installed on the body (611), the second connector (613) is installed at the bottom of the body (611), the image processor (612) is electrically connected to the second connector (613), and the image processor (612) is a camera or a three-dimensional scanner having a structured light generator.

5. The three-dimensional printer according to claim 4, wherein the image capture device (61) further includes at least one light emitting assembly (614), the light emitting assembly (614) is installed on the body (611) and disposed at one side of the image processor (612), the light emitting assembly (614) is electrically connected to the second connector (613), and the light emitting assembly (614) is a light-emitting-diode strip.

6. The three-dimensional printer according to claim 5, wherein the image capture device (61) further includes at least one light diffusion structure (615), the light diffusion structure (615) is installed on the body (611) and covers the light emitting assembly (614), and the light diffusion structure (615) is a matte board.

7. The three-dimensional printer according to claim 6, wherein the three-dimensional printer includes two image processors (612), two light emitting assemblies (614) and two light diffusion structures (615), the body (611) includes, at its middle section, an inclined protruding block (616) gradually thickening towards a top thereof, the two image processors (612) are installed one above the other in spaced-apart relation to each other on the inclined protruding block (616), the body (611) includes two trenches (617) disposed at two sides of the inclined protruding block (616), the two light emitting assemblies (614) are disposed at the two trenches (617) respectively, and the two light diffusion structures (615) cover the two trenches (617) respectively.

8. The three-dimensional printer according to claim 3, wherein the scanning module (6) further includes a back plate (63), the back plate (63) is detachably connected to the bottom base (15) and surrounds the rotary plate (62) at one side away from the image capture device (61), and the back plate (63) is a light reflecting board or a light absorbing board.

## Patentansprüche

1. Ein dreidimensionaler Drucker, bestehend aus:
einem Gehäuse (1), einer Aufnahmekammer (11), die innerhalb des Gehäuses (1) angeordnet ist, wobei die Aufnahmekammer (11) in einen ersten Bereich (12) und einen zweiten Bereich (13) unterteilt ist;
eine Druckplattform (2), die im ersten Bereich (12) angeordnet ist;
ein Reinigungsmodul (3), das in einem Teil des zweiten Bereichs (13) angeordnet ist, wobei der verbleibende Teil des zweiten Bereichs (13) einen verbleibenden Raum (e) bildet;
ein dreidimensionales Druckmodul (4), das über der Druckplattform (2) angeordnet ist;
ein Farbdüsenmodul (5), wobei das Farbdüsenmodul (5) über der Druckplattform (2) angeordnet und zu dem Reinigungsmodul (3) bewegbar ist, wobei das Reinigungsmodul (3) zum Reinigen des Farbdüsenmoduls (5) verwendet wird;
**gekennzeichnet durch**
ein Abtastmodul (6), das in dem verbleibenden Raum (en) installiert ist, wobei der verbleibende Raum (e) in einen ersten Leerraum (a1) gegenüber dem Reinigungsmodul (3) und einen zweiten Leerraum (a2) unter dem Reinigungsmodul (3) unterteilt ist, das Abtastmodul (6) eine Bilderfassungsvorrichtung (61) und eine Drehplatte (62) umfasst, die Bilderfassungsvorrichtung (61) in dem ersten Leerraum (a1) installiert ist, die Drehplatte (62) in dem zweiten Leerraum (a2) installiert ist, und die Bilderfassungsvorrichtung (61) entsprechend der Drehplatte (62) angeordnet ist.

2. Der dreidimensionaler Drucker nach Anspruch 1, wobei das Gehäuse (1) eine Öffnung (14) aufweist, die mit der Aufnahmekammer (11) in Verbindung steht, der erste Bereich (12) von der Öffnung (14) entfernt ist und der zweite Bereich (13) angrenzend an die Öffnung (14) angeordnet ist.

3. Der dreidimensionaler Drucker nach Anspruch 1, wobei das Gehäuse (1) eine Bodenbasis (15) aufweist, die am Boden der Aufnahmekammer (11) angeordnet ist, die Bilderfassungsvorrichtung (61) und die Drehplatte (62) lösbar mit der Bodenbasis (15) verbunden sind, die Bodenbasis (15) einen ersten elektrischen Verbinder (151) aufweist, die Bilderfassungsvorrichtung (61) einen zweiten Verbinder (613) aufweist und der zweite Verbinder (613) elektrisch mit dem ersten elektrischen Verbinder (151) verbunden ist.

4. Der dreidimensionaler Drucker nach Anspruch 3, wobei die Bilderfassungsvorrichtung (61) einen Körper (611) und mindestens einen auf dem Körper (611) installierten Bildprozessor (612) umfasst, der zweite Verbinder (613) an der Unterseite des Körpers (611) installiert ist, der Bildprozessor (612) elektrisch mit dem zweiten Verbinder (613) verbunden ist und der Bildprozessor (612) eine Kamera oder ein dreidimensionaler Scanner mit einem Generator für strukturiertes Licht ist.

5. Der dreidimensionaler Drucker nach Anspruch 4, wobei die Bilderfassungsvorrichtung (61) ferner mindestens eine lichtemittierende Anordnung (614) aufweist, die lichtemittierende Anordnung (614) auf dem Körper (611) installiert und an einer Seite des Bildprozessors (612) angeordnet ist, die lichtemittierende Anordnung (614) elektrisch mit dem zweiten Verbinder (613) verbunden ist und die lichtemittierende Anordnung (614) ein Leuchtdiodenstreifen ist.

6. Der dreidimensionaler Drucker nach Anspruch 5, wobei die Bilderfassungsvorrichtung (61) ferner mindestens eine Lichtdiffusionsstruktur (615) aufweist, die Lichtdiffusionsstruktur (615) auf dem Körper (611) installiert ist und die lichtemittierende Anordnung (614) bedeckt und die Lichtdiffusionsstruktur (615) eine matte Platte ist.

7. Der dreidimensionaler Drucker nach Anspruch 6, wobei der dreidimensionale Drucker zwei Bildprozessoren (612), zwei lichtemittierende Anordnungen (614) und zwei Lichtdiffusionsstrukturen (615) aufweist, der Körper (611) in seinem mittleren Abschnitt einen geneigten, vorstehenden Block (616) aufweist, der sich zu seiner Oberseite hin allmählich verdickt, die beiden Bildprozessoren (612) übereinander in beabstandeter Beziehung zueinander auf dem geneigt vorstehenden Block (616) installiert sind, der Körper (611) zwei Gräben (617) aufweist, die an zwei Seiten des geneigt vorstehenden Blocks (616) angeordnet sind, die beiden lichtemittierenden Anordnungen (614) jeweils an den beiden Gräben (617) angeordnet sind und die beiden Lichtdiffusionsstrukturen (615) jeweils die beiden Gräben (617) abdecken.

8. Der dreidimensionaler Drucker nach Anspruch 3, wobei das Abtastmodul (6) ferner eine Rückplatte (63) aufweist, die Rückplatte (63) lösbar mit der Bodenbasis (15) verbunden ist und die Drehplatte (62) an einer Seite entfernt von der Bilderfassungsvorrichtung (61) umgibt, und die Rückplatte (63) eine lichtreflektierende oder lichtabsorbierende Platte ist.

## Revendications

1. Une imprimante tridimensionnelle, comprenant:
un boîtier (1), une chambre conteneur (11) étant disposée à l'intérieur du boîtier (1), la chambre conteneur (11) étant divisée en une première zone (12) et une seconde zone (13);
une plate-forme d'impression (2) disposée dans la première zone (12);
un module de nettoyage (3) disposé dans une partie de la seconde zone (13), la partie restante de la seconde zone (13) formant un ou des espaces restants;
un module d'impression tridimensionnel (4) disposé sur la plate-forme d'impression (2);
un module de buse de coloration (5), le module de buse de coloration (5) étant disposé sur la plate-forme d'impression (2) et mobile vers le module de nettoyage (3), le module de nettoyage (3) étant utilisé pour nettoyer le module de buse de coloration (5); **caractérisé par**
un module de numérisation (6) installé dans le ou les espace(s) restant(s),
dans lequel le ou les espace(s) restant(s) sont divisés en un premier espace libre (a1) opposé au module de nettoyage (3) et un second espace libre (a2) sous le module de nettoyage (3), le module de balayage (6) comprenant un dispositif de capture d'image (61) et une plaque rotative (62), le dispositif de capture d'image (61) étant installé dans le premier espace libre (a1), la plaque rotative (62) étant installée dans le deuxième espace libre (a2) et le dispositif de capture d'image (61) est disposés en correspondance avec la plaque rotative (62).

2. L'imprimante tridimensionnelle selon la revendication 1, dans laquelle le boîtier (1) comprend une ouverture (14) communiquant avec la chambre conteneur (11), la première zone (12) est éloignée de l'ouverture (14) et la seconde zone (13) est disposée à côté de l'ouverture (14).

3. L'imprimante tridimensionnelle selon la revendication 1, dans laquelle le boîtier (1) comprend une base inférieure (15) disposée au fond de la chambre conteneur (11), le dispositif de capture d'image (61) et la plaque rotative (62) étant connectés de manière amovible à la base inférieure (15), la base inférieure (15) comprenant un premier connecteur électrique (151), le dispositif de capture d'image (61) comprenant un deuxième connecteur (613) et le deuxième connecteur (613) étant connecté électriquement au premier connecteur électrique (151).

4. L'imprimante tridimensionnelle selon la revendication 3, dans laquelle le dispositif de capture d'image (61) comprend un corps (611) et au moins un processeur d'image (612) installé sur le corps (611), le deuxième connecteur (613) est installé sur le fond du corps (611), le processeur d'image (612) étant connecté électriquement au second connecteur (613), et le processeur d'image (612) étant une caméra ou un scanner tridimensionnel ayant un générateur de lumière structuré.

5. L'imprimante tridimensionnelle selon la revendication 4, dans laquelle le dispositif de capture d'image (61) comprend en outre au moins un ensemble d'émission de lumière (614), l'ensemble d'émission de lumière (614) étant installé sur le corps (611) et disposé sur un côté du processeur d'image (612), l'ensemble d'émission de lumière (614) étant connecté électriquement au deuxième connecteur (613), et l'ensemble d'émission de lumière (614) étant une bande de diodes électrolum inescentes.

6. L'imprimante tridimensionnelle selon la revendication 5, dans laquelle le dispositif de capture d'image (61) comprend en outre au moins une structure de diffusion de lumière (615), la structure de diffusion de lumière (615) est installée sur le corps (611) et recouvrant l'ensemble d'émission de lumière (614), et la structure de diffusion de lumière (615) étant un panneau mat.

7. L'imprimante tridimensionnelle selon la revendication 6, dans laquelle l'imprimante tridimensionnelle comprend deux processeurs d'image (612), deux ensembles émetteurs de lumière (614) et deux structures de diffusion de lumière (615), le corps (611) comprenant, en son milieu, un bloc en saillie incliné (616) s'épaississant progressivement vers son sommet, les deux processeurs d'images (612) étant installés l'un au-dessus de l'autre à distance l'un de l'autre sur le bloc en saillie incliné (616), le corps (611) comprenant deux tranchées (617) disposées sur deux côtés du bloc en saillie incliné (616), les deux ensembles d'émission de lumière (614) étant respectivement disposés au niveau des deux tranchées (617), et les deux structures de diffusion de lumière (615) recouvrant les deux tranchées (617) respectivement.

8. L'imprimante tridimensionnelle selon la revendication 3, dans laquelle le module de balayage (6) comprend en outre une plaque arrière (63), la plaque arrière (63) étant reliée de manière amovible à la base inférieure (15) et entoure la plaque rotative (62) à un côté éloigné du dispositif de capture d'image (61), et la plaque arrière (63) est un panneau réfléchissant la lumière ou un panneau absorbant la lumière.
